# EUROPÄISCHE PATENTSCHRIFT

(11) **EP 3 276 064 B1**
(45) Veröffentlichungstag und Bekanntmachung des Hinweises auf die Patenterteilung: **02.09.2020**
(21) Anmeldenummer: 17183433.6
(22) Anmeldetag: 27.07.2017
(51) Int. Cl.: D04H 1/4266, B27N 3/04, B27N 3/14, B32B 5/02, B32B 5/26, B32B 7/00, B32B 7/12, B32B 21/02, D04H 1/74, E04C 2/24

(54) **SANDWICHKERN UMFASSEND EINEN FASERWERKSTOFF UND VERFAHREN ZU SEINER HERSTELLUNG SOWIE SANDWICHPLATTE**
SANDWICH CORE COMPRISING A FIBRE MATERIAL AND METHOD FOR ITS PREPARATION AND SANDWICH PANEL
NOYAU SANDWICH COMPRENANT UN MATÉRIAU À BASE DE FIBRES ET PROCÉDÉ DE FABRICATION AINSI QUE PANNEAU SANDWICH

(30) Priorität: 27.07.2016 DE 102016113892
(43) Veröffentlichungstag der Anmeldung: 31.01.2018
(73) Patentinhaber: Technische Universität Dresden, 01069 Dresden (DE)
(72) Erfinder: Herold, Jan-Hendrik, 01127 Dresden (DE); Tech, Sören, 17489 Greifswald (DE); Wagenführ, André, 01109 Dresden (DE)
(74) Vertreter: Gottfried, Hans-Peter

(56) Entgegenhaltungen:
- EP-A1- 2 305 869
- DE-A1- 2 503 123
- DE-T2- 69 104 730
- DE-U1- 20 108 858
- GB-A- 2 418 643

## Beschreibung

Die Erfindung betrifft einen Sandwichkern, umfassend einen Faserwerkstoff als Kernwerkstoff, der in einer Hauptlastrichtung einem höheren Lasteintrag standhält als in einer anderen Lastrichtung, wobei die Hauptlastrichtung des Sandwichkerns senkrecht zu einer Plattenebene, aufgespannt durch die Kanten mit der größten Längenausdehnung, liegt. Die Erfindung betrifft weiterhin ein Verfahren zur Herstellung des Sandwichkerns und eine Sandwichplatte, umfassend den Sandwichkern. Der Sandwichkern weist bevorzugt eine besonders niedrige Dichte auf.

Der Leichtbau in Sandwichbauweise, bei der ein leichter Kern geringerer Festigkeit mit Deckschichten höherer Zugfestigkeit zu einem sehr steifen, flächigen Bauelement verbunden wird, ist aus vielen Anwendungsfeldern nicht mehr wegzudenken. So werden Kernwerkstoffe in den Bereichen Marine, regenerative Energie, hier insbesondere bei der Windkraft, bei Schienenfahrzeugen, im Transportwesen (LKW, Caravan), im Bauwesen, in der Luftfahrt, beim Innenausbau und beim Messebau eingesetzt.

Auch im Bereich nachwachsende Rohstoffe gibt es Versuche, Verbundmaterialien zu schaffen, die einem gerichteten Lasteintrag senkrecht zu den Flächen besser standhalten. Bei der Verwendung von Kernstrukturen auf Basis nachwachsender Rohstoffe, wie z. B. Balsa-Hirnholz, wird in jüngster Vergangenheit gerne der Begriff "Green Composites" verwendet.

Entsprechend der Anwendung werden die Kernwerkstoffe mittels Bindemittel mit den Deckschichten zusammengefügt. Als naturfaserbasierte Deckschichtwerkstoffe sind für den Bereich Möbel- und Innenausbau dünne Hartfaserplatten oder andere Werkstoffe mit hoher Zugfestigkeit in Plattenebene geeignet.

Für Anwendungen mit höheren Festigkeitsanforderungen oder für Außenbereiche, die unter dem Einfluss von Feuchte leiden, sind auch wasserfeste Decklagenwerkstoffe, z. B. auf Glas- oder Kohlefaserbasis vorstellbar.

Der gegenwärtig vorbekannte Stand der Technik ist gekennzeichnet durch die Verwendung und den Einsatz folgender Materialien:
Materialien mit homogenen Kernstrukturen mit gerichteten Strukturelementen senkrecht zur Plattenebene wie bei
- Balsa Hirnholz (wachstumsbedingte Faserausrichtung senkrecht zur Plattenebene); teilweise auch abgesperrt mit Dünn-MDF;
- Stäbchensperrholz mit aufrecht stehenden Jahresringen (d. h. wachstumsbedingte senkrechte Faserrichtung), senkrecht zur Plattenebene, wobei die Mittellage aus ca. 5 mm starken Schälfurnierstreifen aus Albasia besteht, die verleimt sowie einzeln versetzt verzahnt sind und dadurch leicht sind und gute Festigkeitswerte aufweisen;
- homogene Kernstrukturen ohne gerichtete Strukturelemente: Schaumkerne, z. B. EPS- Hartschaumkern.

Die Nachteile bestehen darin, dass keine homogene Faserverteilung und/ oder Dichteverteilung aufgrund der Jahrringstruktur möglich ist. Große Partikel im Material, insbesondere Späne, tragen zu Inhomogenität im Werkstoff bei.

Eine weitere Gruppe von Werkstoffen weist homogene Kernstrukturen mit gerichteten Strukturelementen parallel zur Plattenebene auf. Dies ist beispielsweise der Fall bei Mineralfaserdämmplatten. Diese weisen eine liegende Faser auf, woraus eine geringe Biegefestigkeit resultiert. Nachteile sind eine fehlende gerichtete Steifigkeits- und Festigkeitseigenschaft, zudem ist der Werkstoff nicht biobasierend.

Hierzu weist der Stand der Technik verschiedene Möglichkeiten aus, um Mineralfaserdämmplatten mit einer geänderten Faserausrichtung anzubieten.

Die Druckschrift DE 23 07 873 B2 beschreibt ein Verfahren zum Herstellen einer formbeständigen Verbundplatte, die eine Lamellenschicht aus lockerer Mineralwolle umfasst, die an einer oder beiden Oberflächen mit einer Bekleidungsschicht versehen ist. Mehrere Bahnen aus Mineralwolle, deren Fasern ausgeprägt im Wesentlichen parallel zu den Bahnoberflächen verlaufen, werden zu einer Schichtung zusammengeschichtet. Jeweils an die vordere quer zu der Mineralwollbahnenschichtung verlaufende Stirnfläche der Schichtung wird eine der Oberflächenbekleidungsschichten geleimt und danach mit einem der Dicke der Lamellenschicht entsprechenden Abstand von der Stirnfläche ein Schnitt durch die Schichtung ausgeführt. Auf die Schnittfläche wird danach gegebenenfalls die andere Oberflächenbekleidungsschicht aufgebracht. Das Zusammenschichten der Mineralwollbahnen und die Weiterverarbeitung der Schichtung in einen Zusammenhalt gewährleistender Weise erfolgen praktisch druckfrei und hochkant. Als Oberflächenbekleidungsschichten werden steife Platten eingesetzt.

Aus der Druckschrift DE 25 03 123 A1 ist ein Verfahren zur Herstellung von Verbundplatten mit einem Kern oder einer Beschichtung sowie derartige Verbundplatten bekannt. Als Kern sind Faserlamellenplatten vorgesehen, bei denen die Fasern im Wesentlichen senkrecht auf der Deckschicht stehen oder eine im Wesentlichen senkrechte Verbindung zwischen zwei Deckschichten darstellen. Die Faserlamellen werden aus zuvor gefertigten Platten geschnitten. Das Bindemittel wird zwischen Faserschicht und Deckschicht aufgeschäumt, um Dickentoleranzen der Faserlamellen auszugleichen. Zum Schneiden dieser Lamellen werden die Platten im Stand der Technik mehr oder weniger eingespannt, um die Schneidvorrichtung durch das Material zu führen. Das bedeutet aber immer ein Zusammendrücken der Faserplatte, da diese Platten aus einem sehr weichen Material bestehen. Nach dem Schneiden expandieren die Platten auf ihr ursprüngliches Maß, wodurch auch in der Querrichtung gewisse Längenänderungen auftreten können. Diese Nachteile werden durch die vorgeschlagene Lösung vermieden.

Die Druckschrift DE 27 42 186 A1 befasst sich mit einem Verfahren und einer Vorrichtung zum Herstellen von Mineralfaserbahnen mit etwa senkrecht zu den großen Oberflächen verlaufenden Fasern. Dazu werden mehrere konventionell hergestellte Faserbahnen und -platten mit parallel zu den Hauptoberflächen verlaufenden Fasern übereinandergestapelt, gemeinsam in Streifen geschnitten und so umgelegt, dass die Schnittflächen zur Oberfläche der neuen Bahn werden. Die Streifen werden dazu nach dem Schnitt von einer Saugvorrichtung übernommen, von den jeweiligen Faserplatten abgerückt und gemeinsam in etwa waagrechte Richtung gebracht und weiterbefördert.

Eine weitere Lösung beschreibt die Druckschrift DE 198 30 066 B4 mit einem Dämmelement aus Mineralwolle mit einem vertikalen und horizontal überdeckenden Faserverlauf, bestehend aus über Klebenähte zusammengefügten Mineralwollestreifen. Die Mineralwollestreifen sind aus einer Platte mit einem, bezogen auf ihre großen Achsen, vorwiegend senkrechten Faserverlauf geschnitten und, nach einer 90° Drehung um ihre Längsmittenachse, aneinandergefügt. Das so gewonnene Dämmelement weist eine Druckfestigkeit von 300 kN/m² bis 500 kN/m² und eine Abreißfestigkeit von 200 kN/m² bis 450 kN/m² auf. Die hohe Druckfestigkeit und Abreißfestigkeit macht das Dämmelement für abschließende Schichten verwendbar.

Auch die Druckschrift DE 691 04 730 T2 befasst sich mit der Herstellung von aus miteinander verbundenen, stabförmigen Mineralfaserelementen (Lamellen) zusammengesetzten Isoliertafelelementen. Die Herstellung umfasst Umwandeln einer Schmelze eines Mineralfasern bildenden Ausgangsmaterials zu Fasern, Zuführen eines Bindemittels zu den Fasern, Sammeln der Fasern auf einem Förderband zur Bildung einer primären Fasermatte. Die stabförmigen Faserelemente werden auf die gewünschten Längen geschnitten, bevor sie um 90° gewendet und zu Lamellentafeln zusammengefügt werden. Ein derartiges Wenden kann beispielsweise bewirkt werden in Verbindung mit der Überführung der geschnittenen Lamellen von einem Förderband, auf dem sie in Längsrichtung der Lamellen befördert werden, auf ein anderes Förderband, das sich senkrecht zum ersten Band bewegt und auf dem die Lamellen in einer Richtung senkrecht zu ihrer Längsrichtung befördert werden. Dadurch wird wenig Raum benötigt. Alternativ kann das Wenden der Lamellen während des Schneidens der Matte zu Lamellen bewirkt werden. Die auf geeignete Weise ausgerichteten Lamellen, die eine Lamellentafel bilden sollen, können miteinander verbunden werden, vorzugsweise mittels eines Bindemittels.

Eine weitere Gruppe von Werkstoffen weist inhomogene Kernstrukturen mit gerichteten Strukturelementen senkrecht zur Plattenebene, wie bei Wabenkernen, z. B. aus Aramidfaserpapier, oder einem Stützgewebe, z. B. Paraglass. Die Nachteile dieser Werkstoffe liegen in der fehlenden homogenen Stützwirkung der (dünnen) Deckschicht, denn die Strukturen weisen Hohlräume auf, die zu lokalen Versagensarten führen. Weiterhin besitzen Sandwichbauteile mit solchen Kernstrukturen einen geringen Widerstand gegen stoßweise Beanspruchung.

Aus dem Stand der Technik bekannt sind zudem Werkstoffe mit inhomogenen Kernstrukturen mit gerichteten Strukturelementen, teilweise senkrecht zur Plattenebene, wie bei der Röhrenspanplatte oder der Dreischichtplatte. Bei der Röhrenspanplatte erfolgt die Herstellung im Strangpressverfahren. Die Späne werden vorwiegend senkrecht zur Plattenebene angeordnet. Dadurch erhält die Röhrenspanplatte Eigenschaften wie gute Druckfestigkeit, geringe Dickenquellung, niedriges Gewicht und niedrige Biegefestigkeit. Allerdings ist eine Beplankung notwendig (Dünnspan- oder Hartfaserplatte, MDF oder Sperrholz). Die Dreischichtplatte mit leichter Mittellage ist eine leichte Massivholzplatte mit spezieller Mittellage. Nachteilig ist bei den Werkstoffen dieser Kategorie die fehlende gerichtete Steifigkeits- und Festigkeitseigenschaft wodurch ein lokales Versagen möglich wird. Dies stellt einen entscheidenden Nachteil dar.

Eine weitere Gruppe von Werkstoffen ist gekennzeichnet durch inhomogene Kernstrukturen ohne gerichtete Strukturelemente. Ein Beispiel hierfür sind Schaumkerne in Holzhülle. Weiterhin sind Materialen auf Holzfaserbasis bekannt, die aber keine Faserausrichtung oder eine Faserausrichtung vorzugsweise in Plattenebene aufweisen.

Die Druckschrift GB 2 418 643 A offenbart einen Sandwichkern (22), umfassend einen Faserwerkstoff (siehe Abbildung 3 und Abschnitt von S. 1, Z. 25 bis S. 2, Z. 25; "thermobonded fibre layer 22') als Kernwerkstoff, der in einer Hauptlastrichtung einem höheren Lasteintrag standhält als in einer anderen Lastrichtung, wobei die Hauptlastrichtung des Sandwichkerns senkrecht zu einer Plattenebene liegt (siehe S. 2, Z. 9-13), die durch zwei der in einer Ebene liegenden Kanten eines Sandwichkerns, die die größte Längenausdehnung aufweisen, aufgespannt wird. Der Kernwerkstoff (22) umfasst in homogener Struktur vorliegende lignocellulose Fasern (Flachsfasern, siehe S. 2, Z. 1-3), die jedoch mit Polyesterfasern gemischt sind.

In der Druckschrift DE 201 08 858 U1 wird, ausweislich von Abbildung, Zusammenfassung und Anspruch 1, ein Sandwichkern offenbart, umfassend einen natürlichen Werkstoff als Kernwerkstoff (Kernschicht 1 aus Massivholz), der in einer Hauptlastrichtung einem höheren Lasteintrag standhält als in einer anderen Lastrichtung. Die Hauptlastrichtung des Sandwichkerns liegt senkrecht zu einer Plattenebene, die durch zwei der in einer Ebene liegenden Kanten eines Sandwichkerns, die die größte Längenausdehnung aufweisen, aufgespannt wird.

Derzeit gibt es jedoch keinen Kernwerkstoff aus nachwachsenden Rohstoffen, der aus Holzfasern oder ähnlichen natürlichen Faserrohstoffen hergestellt wird, eine ideale Faserausrichtung senkrecht zur Plattenebene in ausreichendem Maße besitzt, um einem Lasteintrag senkrecht zur Plattenebene in verstärktem Maße standhalten zu können, zudem eine geringe Dichte aufweist und durch die im Wesentlichen homogene Anordnung der Fasern eine hohe Druck- und Schubfestigkeit aufweist. Einen solchen Werkstoff anzubieten ist Aufgabe der vorliegenden Erfindung.

Die Aufgabe wird gelöst durch einen Sandwichkern, umfassend einen Faserwerkstoff als Kernwerkstoff, der in einer Hauptlastrichtung einem höheren Lasteintrag standhält als in einer anderen Lastrichtung. In einer Hauptlastrichtung kann somit eine höhere Druckkraft und eine höhere Zugkraft aufgenommen werden als in jeder anderen Lastrichtung. Die Hauptlastrichtung des Sandwichkerns liegt senkrecht zu einer Plattenebene, aufgespannt durch die Kanten mit der größten Längenausdehnung, also senkrecht zu den Flachseiten. Erfindungsgemäß besteht der Faseranteil des Kernwerkstoffs aus in homogener Struktur vorliegenden lignocellulosen Fasern, die zu wenigstens 80 % um einen Winkel von weniger als 10 % von der Senkrechten zur Plattenebene abweichen. Die übrigen Fasern, die weiter von der Senkrechten abweichen, dienen der Querversteifung des Faserwerkstoffs, der den erfindungsgemäßen Kernwerkstoff bildet, und erhöhen damit dessen Schubfestigkeit.

Während bei synthetischen Faserwerkstoffen, insbesondere Mineralwolle, alle Fasern annähernd dieselbe Struktur und Ausrichtung aufweisen, unterscheiden sich lignocellulose Faserwerkstoffe hiervon gravierend. Derartige Faserwerkstoffe, für die Fasern beispielsweise aus Holz oder anderen verholzten Pflanzen gewonnen werden, liegen bedingt durch die Art ihrer Herstellung bzw. Gewinnung durch Herauslösen aus einem festen Verbund nicht in einer einheitlichen Ausrichtung vor. Außerdem weisen die einzelnen Fasern teilweise selbst eine verzweigte Struktur auf.

Diese letztgenannten Eigenschaften der lignocellulosen Fasern, verbunden mit dem erfindungsgemäß vorgesehenen Grad der Ausrichtung, führten überraschend zu einer besonders hohen Querversteifung, die die einzelnen Fasern bei Drucklast stabilisiert und ein Ausknicken verhindert. Zudem ergibt sich hieraus auch ein höherer Widerstand gegen Schubbelastungen, was gleichzeitig zu einer höheren Biegesteifigkeit einer Sandwichplatte führt, die den erfindungsgemäßen Sandwichkern in ihrem Schichtaufbau nutzt. Die ausschließlich senkrecht zur Plattenebene ausgerichteten und völlig gleichmäßig strukturierten Mineralfasern hingegen erreichen mangels Vernetzung kaum eine seitliche Stabilisierung und ein Sandwichkern aus einem solchen Faserwerkstoff weist damit eine entsprechend geringere Schubfestigkeit auf.

Davon abgesehen, werden durch den erfindungsgemäßen Sandwichkern auch die allgemein bekannten Vorteile des Einsatzes von nachwachsenden Rohstoffen, insbesondere hinsichtlich Ressourcenschonung und Umweltentlastung, erzielt.

Bei einer ersten Variante werden im Herstellprozess der Schicht die Fasern mit entsprechender Technik bzw. Technologie senkrecht zur Plattenebene ausgerichtet. Als Technologie sind verschiedene Systeme vorstellbar: gerichtetes Streuen, Ausrichten der Fasern durch mechanische Manipulation bzw. mittels statischer Aufladung o. ä. Bei einer zweiten Variante findet der Ausrichtungsprozess der Fasern in Plattenebene statt, wobei hier wahlweise eine Orientierung in Herstellungsrichtung als auch quer dazu vorgesehen ist. Auch hier erfolgt dies durch die Verfahren gerichtetes Streuen oder Ausrichten der Fasern mittels mechanischer Manipulation, wie z. B. Kämmen, Bürsten, Krempeln oder Kadieren, die auf die Fasern anzuwenden sind.

Nach der Herstellung der Platten werden der Faserausrichtung die Platten derart eingeschnitten, um 90° gedreht und zur Platte gefügt, dass die Kernstreifen eine Faserausrichtung senkrecht zur Plattenebene aufweisen, um sie anschließend zu verleimen.

Eine vorteilhafte Weiterbildung des erfindungsgemäßen Sandwichkerns weist einen Anteil an Fasern auf, der zu wenigstens 80 % um einen Winkel von weniger als 10 % von der Senkrechten zur Plattenebene abweicht. Hierdurch wird ein anderes Verhältnis von Druckfestigkeit zu querstabilisierender Vernetzung der Fasern erreicht, das für bestimmte Anwendungsfälle, vor allem bei hohen Druckbelastungen, aber auch bei Zugbelastung (z. B. bei der Verwendung als Fassadendämmplatte, die zugleich als Putzträger dient), Vorteile verspricht.

Ein weiterer Vorteil des erfindungsgemäßen Sandwichkerns besteht in seiner geringen Dichte zwischen 50 und 300 kg/m³. Ein besonders bevorzugter Dichtebereich liegt dabei zwischen 90 und 200 kg/m³. Durch die geringe Dichte werden gute Dämmeigenschaften erreicht, Material gespart und die Verarbeitung ebenso erleichtert wie der Transport der unter Verwendung des erfindungsgemäßen Sandwichkerns hergestellten Platten.

Ein weiterer Aspekt der vorliegenden Erfindung betrifft ein Verfahren zur Herstellung eines Sandwichkerns bei dem die Orientierung der einzelnen lignocellulosen Fasern unmittelbar in die Senkrechte zur Plattenebene erfolgt, ohne dass es einer Fertigung einer Kernplatte mit horizontal ausgerichteten Fasern als Zwischenschritt bedarf. Danach werden die Fasern entlang der Plattenebene verdichtet und eine Kernplatte wird durch Einbringen oder Aktivierung eines Bindemittels hergestellt. Ein Trennen in Kernstreifen und Drehen ist nicht erforderlich, so dass das Verfahren insoweit vereinfacht wird.

Die bevorzugte Ausgestaltung der Verfahrensvariante mit unmittelbarer Orientierung der einzelnen Fasern nutzt die elektrostatische Aufladung der Fasern, um diese auszurichten. Ein elektrisches Feld wird senkrecht zur Plattenebene zwischen einer ersten und einer zweiten Feldplatte, auch als Elektroden bezeichnet, gebildet, indem an zwei Pole, die mit den Feldplatten verbunden sind, eine elektrische Spannung angelegt wird.

Bei einer weiteren Ausgestaltung des erfindungsgemäßen Verfahrens zur Herstellung eines Sandwichkerns erfolgt die Orientierung der einzelnen lignocellulosen Fasern zu einem Faservlies. Die Orientierung der Fasern ist in der Plattenebene und in Vorschubrichtung oder die Orientierung ist in der Plattenebene und quer zur Vorschubrichtung vorgesehen. Die Anordnung der Fasern zur Herstellung des Faservlieses erfolgt beispielsweise durch ein mechanisches Verfahren, z. B. mittels Nadel- oder Kammwalzen, bzw. mit Unterstützung einer Luftdurchströmung.

Aus dem Faservlies wird nach einer bevorzugten Weiterbildung des Verfahrens eine Kernplatte durch Einbringen oder Aktivierung eines Bindemittels hergestellt. In einem nachfolgenden Schritt wird die Kernplatte in Kernstreifen gleicher Breite getrennt, wobei deren Breite der Höhe des herzustellenden Sandwichkerns entspricht. Die Kernstreifen werden danach um 90° gedreht, so dass sich die Orientierung der Fasern und die damit auch Hauptlastrichtung senkrecht zur Plattenebene ausbilden. Es folgt ein erneutes Zusammenfügen der Kernstreifen in ihrer gedrehten Lage an den einander berührenden Flächen zu dem Sandwichkern.

Es hat sich als vorteilhaft erwiesen, wenn ein Auftrennen der Kernplatte in Kernstreifen längs zur Vorschubrichtung und ein Drehen jedes der Kernstreifen um eine Achse längs zur Vorschubrichtung erfolgen. Dies kann entweder einzeln, bei jedem der von der Kernplatte abgetrennten Kernstreifen gesondert, oder kontinuierlich bei einer quasi endlosen Kernplatte, wobei die Verbindung zwischen Kernplatte und Kernstreifen nicht getrennt wird.

Alternativ hierzu erfolgt ein Auftrennen der Kernplatte, die die Orientierung der einzelnen Fasern in Vorschubrichtung aufweist, in Kernstreifen quer zur Vorschubrichtung. Das Drehen jedes Kernstreifens um eine Achse quer zur Vorschubrichtung ist nachfolgend vorgesehen.

Ein weiterer Aspekt der Erfindung betrifft ein Verfahren zur Herstellung einer Sandwichplatte. Nach der Erfindung wird ein Sandwichkern, erhältlich nach einem Verfahren wie zuvor beschrieben, zugeführt und mit wenigstens einer Deckschicht versehen.

Die Erfindung betrifft weiterhin eine Vorrichtung zur Herstellung eines Sandwichkerns durch eines der zuvor beschriebenen Verfahren, wobei eine Einrichtung zur Bildung eines Faservlieses einschließlich einer Einrichtung zur Faserausrichtung, eine Einrichtung zum Eintrag eines Bindemittels und/oder eine Einrichtung zur Aktivierung des Bindemittels mit dem Ziel der Ausbildung einer Kernplatte vorgesehen sind.

Die Einrichtung zur Faserausrichtung umfasst nach einer bevorzugten Ausführungsform ebenfalls eine Einrichtung zur Ausbildung eines elektrischen Felds zwischen einer ersten und einer zweiten Feldplatte, auch als Elektrode bezeichnet. Die Feldplatten sind parallel zueinander und in Plattenebene angeordnet.

Eine Einrichtung zum Trennen der ausgebildeten Kernplatte in Kernstreifen, eine Einrichtung zum Drehen der Kernstreifen und eine Einrichtung zum Zusammenfügen der gedrehten Kernstreifen zu dem herzustellenden Sandwichkern sind nach einer vorteilhaften Ausgestaltung der Vorrichtung vorgesehen.

Durch die Lösung der verfahrenstechnischen Aufgabe der Erfindung wird erreicht, eine Kernschicht für einen Sandwichwerkstoff zu erzeugen, die folgende Eigenschaften aufweist:
- Einsatz faserförmiger nachwachsender Rohstoffe (z. B. Holzfasern, lignocellulose Rohstoffe mit faserartig ausgerichteter Struktur);
- Faserausrichtung senkrecht zur Plattenebene;
- geringe Dichte, beispielsweise zwischen 50 und 200 kg/m³;
- homogene Verteilung des Materials.

Dabei kann die Faserausrichtung bei der Bildung der Kernschicht oder nachträglich durch Manipulation eines flächigen Plattenwerkstoffs erzeugt werden. Der wesentliche Vorzug liegt in der Faserausrichtung der Naturfasern und ggf. in der Manipulation der Zwischenprodukte bis zur Herstellung eines Kernwerkstoffs mit Faserausrichtung senkrecht zur Plattebene.

Im Ergebnis der vorliegenden Erfindung werden Naturfasern in einem technischen Prozess zu einem sehr leichten Kernwerkstoff zusammengefügt, der eine Faserausrichtung weit über 50%, im günstigen Fall bis 80%, besonders bevorzugt 95% im Wesentlichen senkrecht zur Plattenebene aufweist und so höchste Druckfestigkeiten bei bevorzugten Dichten zwischen 50 ... 300 kg/m³, besonders bevorzugt um 90 bis zu 200 kg/m³ ermöglicht.

Ein weiterer wesentlicher Vorteil der Erfindung liegt in dem Einsatz von PMDI als Bindemittel für Faserplatten mit geringer Dichte (Stand der Technik bei Dichten von 90 ... 400 kg/m³). Im Vergleich zu anderen vorbekannten Holzwerkstoffen für den Möbel- und Innenausbau wird hierdurch auf den Einsatz von Formaldehyd als Lösungsmittel verzichtet. Formaldehyd steht unter dem Verdacht Krebs zu erzeugen, weshalb seit Jahren an der Reduktion des Einsatzes in den Fertigungsverfahren gearbeitet wird.

Die erfindungsgemäße Kernschicht mit Faserausrichtung senkrecht zur Plattenebene stellt eine "technische Hirnholzkernschicht" dar, verkörpert dabei zugleich Vorteile, die vor allem hinsichtlich der Homogenität über die Vorzüge einer natürlicher Hirnholzkernschicht hinausreichen.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
Fig. 1: schematisch in Ansicht von oben eine erste Ausgestaltung des erfindungsgemäßen Herstellungsverfahrens mit einem Verfahrensablauf mit Faserrichtung quer und Trennrichtung längs;
Fig. 2a: schematisch in Ansicht von oben eine zweite Ausgestaltung des erfindungsgemäßen Herstellungsverfahrens, den Verfahrensablauf mit Streifenspreizung;
Fig. 2b: Seitenansicht des Verfahrensablaufs aus Fig. 2a;
Fig. 3: schematisch in Ansicht von oben eine dritte Ausgestaltung des erfindungsgemäßen Herstellungsverfahrens, das einem Verfahrensablauf;
Fig. 4: schematisch in Ansicht von der Seite eine vierte Ausgestaltung des erfindungsgemäßen Herstellungsverfahrens, den Verfahrensablauf;
Fig. 5: schematisch in Ansicht von der Seite ein Verfahren zur Ausrichtung der Fasern; und
Fig. 6: schematisch eine Ausführungsform einer erfindungsgemäßen Sandwichplatte mit einem Sandwichkern, umfassend stehende Fasern, und Deckschichten.

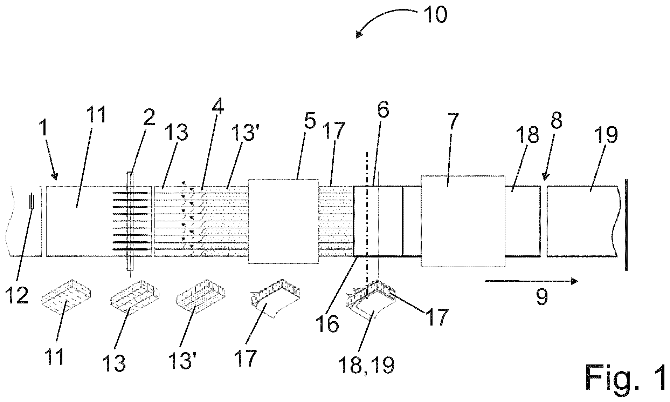

Fig. 1 zeigt schematisch in Ansicht von oben eine erste Ausgestaltung des erfindungsgemäßen Herstellungsverfahrens mit einem Verfahrensablauf 10, wobei unter jedem Verfahrensschritt das Ergebnis in Form einer einzelnen symbolisierten Platte perspektivisch dargestellt wird. Die Prozessrichtung 9 wird durch einen Pfeil anzeigt. Ohne Darstellung erfolgt als vorbereitende Prozessschritte die Herstellung eines Faservlieses, das mit Bindemitteln versehen ist oder versehen wird und nach einem bekannten Verfahren zu einer Kernplatte 11 verpresst wird.

Eine Besonderheit gegenüber den bereits bekannten Verfahren zur Herstellung plattenförmiger Werkstoffe auf Basis von lignocellulosen Fasern besteht jedoch darin, dass vor der Bildung des Faservlieses einer Ausrichtung der Fasern erfolgt. Dies kann beispielsweise durch mechanische Verfahren wie Kämmen, Bürsten, Krempeln oder Kadieren erfolgen. Außerdem bietet sich in diesem Verfahrensschritt die Möglichkeit, eine diskontinuierliche oder sogar lokal individualisierte Dichtestreuung zu erreichen. Damit können z. B. lokal höhere Festigkeiten erreicht werden, um dort beispielsweise später einen hohen lokalen Lasteintrag zu ermöglichen. Im Übrigen ist jedoch die Streuung der Eigenschaften sehr gering, so dass ein sehr homogener Werkstoff hergestellt werden kann.

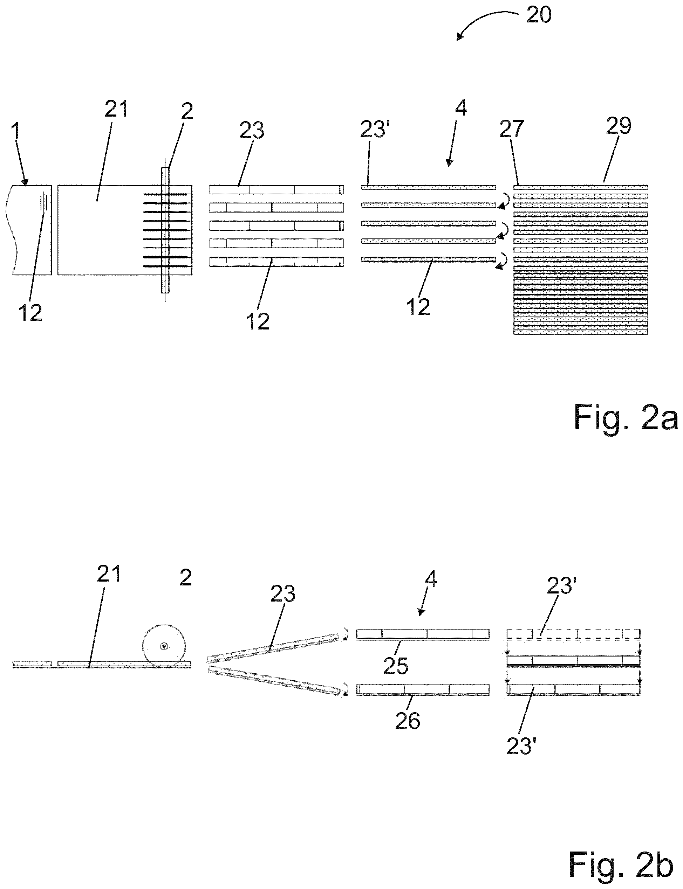

Hierdurch hebt sich die erfindungsgemäße Sandwichplatte beispielsweise von Hirnholz ab, das eine größere natürliche Dichtestreuung aufweist. Die Bildung des Faservlieses und die Herstellung der Kernplatte, wie zuvor beschrieben, gilt gleichermaßen für alle Verfahrensvarianten, die in den nachfolgend beschriebenen Figuren 2 bis 4 dargestellt sind.
Mittels einer Zufuhreinrichtung 1 wird die quasi endlose Kernplatte 11 (alternativ Einzelplatten) dem Prozess zugeführt. Deren Faserausrichtung, also die überwiegende Lage der Fasern 12, ist liegend, also horizontal und parallel zur Unterlage bzw. der Plattenebene, die durch die beiden längsten Kanten aufgespannt wird. Außerdem liegt eine Faserausrichtung quer zur Prozessrichtung 9 vor.

Die Kernplatte 11 wird durch eine Trenneinrichtung, hier eine Vielblattsäge 2, geführt, die die Kernplatte 11 in einzelne Kernstreifen 13 mit immer noch horizontaler Faserausrichtung trennt. Das Trennen kann auch auf andere Weise erfolgen, wie beispielsweise durch Bandsägen, Wasserstrahlschneiden oder ähnliches.

Die Kernstreifen 13 werden in einer Streifendrehstation 4 um 90° um eine Achse, die sich längs zur Prozessrichtung 9 und längs zur Längenausdehnung der Kernstreifen 13 erstreckt, gedreht. Dadurch werden aus den Kernstreifen 13 mit liegender Faser Kernstreifen 13' mit stehender Faser 12, ohne dass im Interesse eines kontinuierlichen Prozessablaufs die Kernstreifen 13, 13' aus einer quasi endlosen Kernplatte 11 voneinander getrennt werden müssen. Bei einzeln dem Prozess zugeführten Kernplatten 11 besitzen naturgemäß auch die Kernstreifen 13, 13' eine entsprechend den Plattenabmaßen endliche Länge.

Die Kernstreifen 13' werden in einer Beleimungseinrichtung 5 beleimt, so dass beleimte Kernstreifen 17 einen Sandwichkern 15 bilden und in die Deckschichtauftrageinrichtung 6 gelangen. Die Verbindung zwischen Sandwichkern 15 und Deckschicht 16 erfolgt in einer Presse 7, aus der eine Sandwichplatte 18 entnommen wird, die stehende Fasern 12 aufweist. Um einzelne Sandwichplatten 19 aus einer quasi endlosen Kernplatte 11 und einer entsprechenden Sandwichplatte 18 zu erhalten, erfolgt ein Abtrennen von einzelnen Sandwichplatten 19 in einer Trenneinrichtung 8.

Alternativ zur Beleimung in einer Beleimungseinrichtung 5 kann auch ein zweistufiger Kleber verwendet werden und zum Deckschichtauftrag bzw. zur seitlichen Verbindung der Kernstreifen 13' genutzt werden. Der Kleber wurde in einer ersten Stufe, beispielsweise zur thermoplastischen Verbindung der Fasern 12, in der Kernplatte 11 aktiviert, zur Verbindung der Sandwichplatte 18 mit der oder den Deckschichten 16 bzw. auch zur seitlichen Verbindung der Kernstreifen 13' untereinander wird eine zweite Klebestufe des Klebers aktiviert. Dabei handelt es sich bei einem hier beispielhaft eingesetzten herkömmlichen Kleber um die duroplastische Klebestufe.

Die Figuren 2a und 2b zeigen schematisch in Ansicht von oben und von der Seite eine zweite Ausgestaltung des erfindungsgemäßen Herstellungsverfahrens, den Verfahrensablauf 20. Einzelne Kernplatten 21 werden dem Prozess zugeführt und nach dem Auftrennen zu Kernstreifen 23 werden diese zu Kernstreifen 23' in der hier nicht dargestellten Streifendrehstation gedreht, um eine stehende Faser 12 zu erreichen.

Um jedoch das Drehen der Kernstreifen 23 zu erleichtern, wird der hierfür nötige Zwischenraum zwischen den Kernstreifen 23 zunächst geschaffen, was vor allem bei größeren Stärken der Kernplatte 21 erforderlich ist. Das kann durch Aufspreizen der einzelnen Kernstreifen 23 in die Breite erfolgen. Besonders bevorzugt ist jedoch ein Verfahrensschritt, bei dem die Kernstreifen 23 wechselweise auf zumindest eine erste und eine zweite Ebene 25, 26 verteilt werden, so dass jeweils eine Lücke mit der Breite eines Kernstreifens 13 entsteht. Dies ist in Fig. 2b in der Seitenansicht gut erkennbar. Durch die gebildeten Lücken ist ein problemloses Drehen auf jeder Ebene gesondert möglich. In jeder Streifendrehstation 4' auf den beiden Ebenen werden die separierten Kernstreifen 23 gedreht.

Es erfolgt weiterhin, ebenso wie bei Verfahrensablauf 10 gemäß der Darstellung in Fig. 1, das Beleimen in der Beleimungseinrichtung, das Auftragen einer Deckschicht auf die gedrehten und beleimten Kernstreifen 23' mit der Deckschichtauftrageinrichtung, das Verpressen in der Presse und das Trennen in der Trenneinrichtung. Diese Schritte sind nicht dargestellt, entsprechen aber denen aus dem Verfahrensablauf 10. Am Ende des Prozessablaufs resultieren Sandwichplatten 19.

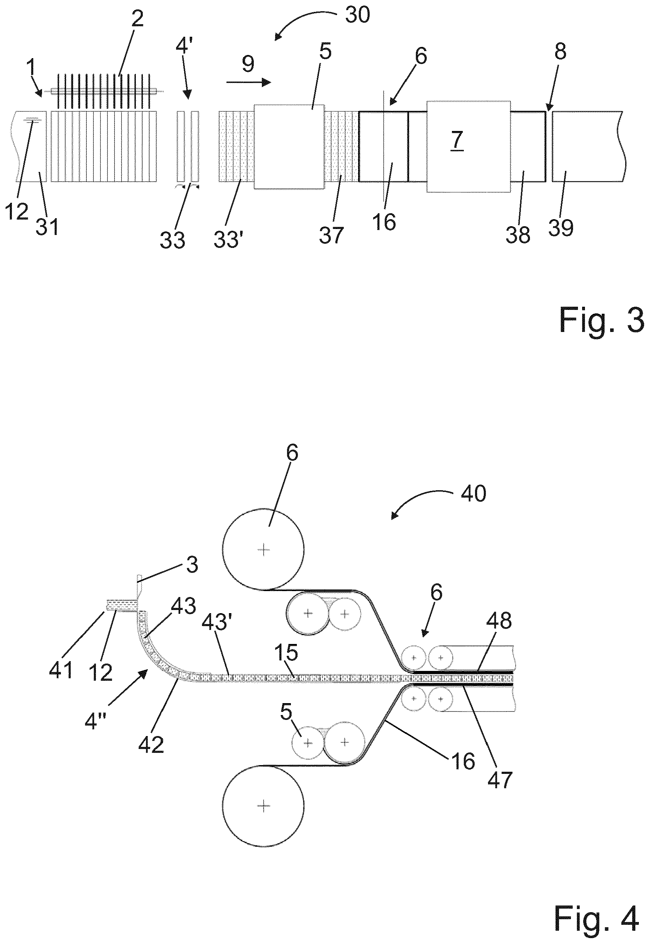

Fig. 3 zeigt schematisch in Ansicht von oben eine dritte Ausgestaltung des erfindungsgemäßen Herstellungsverfahrens, das einem Verfahrensablauf 30 folgt. Hierbei ist als Ausgangsmaterial eine Kernplatte 31 vorgesehen, die ebenfalls liegende Fasern 12 aufweist, die jedoch längs zur Prozessrichtung 9 angeordnet vorliegen. Die Vielblattsäge 2 schneidet deshalb quer zur Prozessrichtung 9, so dass auch die entstehenden Kernstreifen 33 quer zur Prozessrichtung 9 liegen. Dies vereinfacht wiederum die Vereinzelung der Kernstreifen 33 zum Drehen in der Streifendrehstation 4', in der die separierten Kernstreifen 33 manipuliert werden.

Der weitere Prozessablauf mit den gedrehten Kernstreifen 33' entspricht denen der Verfahrensabläufe 10 und 20, wobei eine Beleimungseinrichtung 5 beleimte Kernstreifen 37 erzeugt, die mit der Deckschicht 16 versehen und in der Presse 7 verpresst werden. Das Abtrennen erfolgt auch in einer Trenneinrichtung 8, so dass einzelne Sandwichplatten 39 gebildet werden.

Fig. 4 zeigt schematisch in Seitenansicht eine vierte Ausgestaltung des erfindungsgemäßen Herstellungsverfahrens, den Verfahrensablauf 40. Dieser unterscheidet sich erheblich von den zuvor vorgestellten Verfahrensabläufen, wobei hierbei zunächst die Kernstreifen 43 durch eine Messertrenneinrichtung 3 aus einer Kernplatte 41 erzeugt werden. Dadurch wird auf ein spanendes Trennverfahren verzichtet, so dass eine entsprechende Materialersparnis erzielt werden kann und die Staub- und Abfallentwicklung verringert ist.

Auch das Drehen der entstandenen Kernstreifen 43 erfolgt gänzlich anders, als bei den vorherigen Varianten beschrieben. Die Streifendrehstation 4" umfasst einen Kanal 42, der eine 90°-Kurve beschreibt. In diesem Kanal 42 werden die Kernstreifen 43 nach dem Abtrennen eingeführt und gleiten durch den Kanal 42. Dabei werden die Kernstreifen 43 zwangläufig um 90° dreht, bis Kernstreifen 43' mit stehender Faser 12 vorliegen und den Sandwichkern 15 bilden. Diese werden der Beleimungseinrichtung 5 und der Deckschichtauftrageinrichtung 6 zugeführt, die die Deckschicht 16 hinzufügt. Es resultiert eine endlose Platte 48 mit stehender Faser, wobei die übrigen Prozessschritte, die zur Herstellung einer fertig konfektionierten Platte führen, hier nicht dargestellt sind.

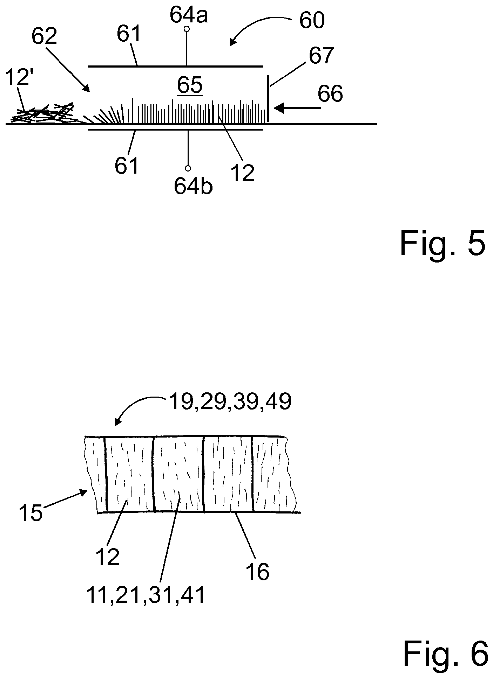

Fig. 5 zeigt schematisch in Ansicht von der Seite ein Verfahren zur Ausrichtung der Fasern 12 mit nachfolgender Bildung einer Kernplatte durch horizontales Pressen. Die Fasern 12 werden zunächst als Haufwerk 12' zugeführt und gelangen in ein elektrisches Feld. Dieses wird zwischen den Feldplatten 61, die mit den Polen 64a und 64b verbunden sind, gebildet. An den Polen 64a und 64b liegt dazu eine elektrische Spannung in ausreichender Höhe, um ein elektrisches Feld zwischen den Feldplatten 61 auszubilden, an. Sobald die Fasern 12 in den Wirkungsbereich des elektrischen Feldes gelangen, richten sie sich entlang den Feldlinien aus, die zwischen den Feldplatten 61 senkrecht zu diesen verlaufen (abgesehen von Randbereichen). Die nun vertikal zur Plattenebene ausgerichteten Fasern 12 werden verdichtet, wozu eine Pressplatte 67 vorgesehen ist, die durch eine Presskraft 66 beaufschlagt ist. Dabei wird ein zuvor eingebrachtes oder bereits an den Fasern 12 haftendes Bindemittel aktiviert oder aushärten gelassen.

Fig. 6 zeigt schematisch eine Ausführungsform einer erfindungsgemäßen Sandwichplatte, die Platte 19, 29, 39, 49 mit einem Kern aus stehenden Fasern 12 und Deckschichten 16, wobei der Kern aus einer der Kernplatten 11, 21, 31, 41 ausgebildet ist.

Die nebeneinander angeordneten, gedrehten Kernstreifen 15, 25, 35, 45 zeigen eine Lage der Fasern 12 senkrecht zur Ebene der Platte 19, 29, 39, 49, so dass die erfindungsgemäßen Vorteile verwirklicht werden.

### Bezugszeichenliste

- 1: Zuführeinrichtung Kernplatte
- 1': Zuführeinrichtung Faservlies
- 2: Vielblattsäge; Einrichtung zum Trennen
- 3: Messertrenneinrichtung; Einrichtung zum Trennen
- 4, 4': Streifendrehstation
- 4": Streifendrehstation mit Kanal
- 5: Beleimungseinrichtung
- 6: Deckschichtauftrageinrichtung
- 7: Presse
- 8: Trenneinrichtung
- 9: Prozessrichtung
- 10: Verfahrensablauf (Faserrichtung quer, Trennrichtung längs)
- 11,21,31,41: Kernplatte
- 12: Faser
- 12': Faserhaufwerk
- 13, 23, 33, 43: Kernstreifen (liegende Faser)
- 13', 23', 33', 43': Kernstreifen (stehende Faser)
- 15: Sandwichkern
- 16: Deckschicht
- 17, 27, 37, 47: Kernstreifen (beleimt/ aktiviert)
- 18, 28, 38, 48: Sandwichplatte (endlos, stehende Faser)
- 19, 29, 39: Sandwichplatte (getrennt)
- 20: Verfahrensablauf (Faserrichtung quer, Trennrichtung längs)
- 25: erste Ebene
- 26: zweite Ebene
- 30: Verfahrensablauf (Faserrichtung längs, Trennrichtung quer)
- 40: Verfahrensablauf (Trennrichtung quer, kontinuierlich)
- 42: Kanal
- 60: Verfahrensablauf mit elektrostatischer Ausrichtung
- 61: Feldplatte
- 62: Ausrichtung
- 64a/b: Pol
- 65: elektrisches Feld
- 66: Verdichtung
- 67: Pressplatte

## Patentansprüche

1. Sandwichkern, umfassend einen Faserwerkstoff als Kernwerkstoff, der in einer Hauptlastrichtung einem höheren Lasteintrag standhält als in einer anderen Lastrichtung, wobei die Hauptlastrichtung des Sandwichkerns senkrecht zu einer Plattenebene liegt, die durch zwei der in einer Ebene liegenden Kanten eines Sandwichkerns (15), die die größte Längenausdehnung aufweisen, aufgespannt wird, **dadurch gekennzeichnet, dass** der Faseranteil des Kernwerkstoffs aus in homogener Struktur vorliegenden lignocellulosen Fasern (12) besteht, die zu wenigstens 80 % um einen Winkel von weniger als 10 % von der Senkrechten zur Plattenebene abweichen.

2. Sandwichkern nach Anspruch 1, der eine Dichte zwischen 50 und 300 kg/m³ ausweist.

3. Verfahren zur Herstellung eines Sandwichkerns nach Anspruch 1 oder 2, **dadurch gekennzeichnet, dass** in einem ersten Verfahrensschritt eine Orientierung der einzelnen lignocellulosen Fasern (12) in die Senkrechte zur Plattenebene erfolgt, in einem zweiten Verfahrensschritt die Fasern entlang der Plattenebene verdichtet werden und in einem dritten Verfahrensschritt eine Kernplatte (11, 21, 31, 41) durch Einbringen oder Aktivierung eines Bindemittels hergestellt wird.

4. Verfahren nach Anspruch 3, wobei die Orientierung der einzelnen Fasern (12) durch elektrostatische Aufladung erfolgt, indem ein elektrisches Feld (65) senkrecht zur Plattenebene zwischen einer ersten und einer zweiten Feldplatte (61) angelegt wird.

5. Verfahren zur Herstellung eines Sandwichkerns nach Anspruch 1 oder 2, wobei in einem ersten Verfahrensschritt eine erste Orientierung der einzelnen lignocellulosen Fasern (12) zu einem Faservlies (51) erfolgt, wobei die Orientierung der Fasern (12) in Plattenebene und in Vorschubrichtung (9) oder eine Orientierung in Plattenebene und quer zur Vorschubrichtung (9) vorgesehen ist, **dadurch gekennzeichnet, dass** aus dem Faservlies (51) eine Kernplatte (11, 21, 31, 41) durch Einbringen oder Aktivierung eines Bindemittels hergestellt wird, die Kernplatte (11, 21,31, 41) in Kernstreifen (13, 23, 33, 43) gleicher Breite getrennt wird, wobei deren Breite der Höhe des herzustellenden Sandwichkerns (15) entspricht, wobei die Kernstreifen (13, 23, 33, 43) um 90° gedreht werden, so dass sich eine zweite Orientierung der Fasern (12) sowie eine Hauptlastrichtung senkrecht zur Plattenebene ausbilden, gefolgt von einem erneuten Zusammenfügen der Kernstreifen (13, 23, 33, 43) in ihrer gedrehten Lage an einander berührenden Flächen zu dem Sandwichkern (15).

6. Verfahren nach Anspruch 5, wobei ein Auftrennen der Kernplatte (11, 21,31, 41) in Kernstreifen (13, 23, 33, 43) längs zur Vorschubrichtung (9) und ein Drehen jedes der Kernstreifen (13, 23, 33, 43) um eine Achse jedes der Kernstreifen (13, 23, 33, 43) längs zur Vorschubrichtung (9) vorgesehen ist.

7. Verfahren nach Anspruch 5, wobei ein Auftrennen der Kernplatte (11, 21,31, 41), die die Orientierung der einzelnen Fasern (12) in Vorschubrichtung aufweist, in Kernstreifen (13, 23, 33, 43) quer zur Vorschubrichtung (9) und Drehen jedes Kernstreifens (13, 23, 33, 43) um eine Achse quer zur Vorschubrichtung (9) vorgesehen ist.

8. Verfahren zur Herstellung einer Sandwichplatte, wobei ein Sandwichkern (15), erhältlich nach einem Verfahren gemäß einem der Ansprüche 5 bis 7, zugeführt und mit wenigstens einer Deckschicht (16) versehen wird.

9. Vorrichtung zur Herstellung eines Sandwichkerns durch ein Verfahren nach Anspruch 3 oder 4 oder nach einem der Ansprüche 5 bis 7, **dadurch gekennzeichnet, dass** eine Einrichtung zur Bildung eines Faservlieses (51) einschließlich einer Einrichtung zur Faserausrichtung, eine Einrichtung zum Eintrag eines Bindemittels und/oder eine Einrichtung zur Aktivierung des Bindemittels mit dem Ziel der Ausbildung einer Kernplatte (11, 21, 31, 41) vorgesehen sind.

10. Vorrichtung nach Anspruch 9, wobei die Einrichtung zur Faserausrichtung eine Einrichtung zur Ausbildung eines elektrischen Felds (65) zwischen einer ersten und einer zweiten Feldplatte (61) umfasst, wobei die Feldplatten (61) parallel zueinander und parallel zur Plattenebene angeordnet sind.

11. Vorrichtung nach Anspruch 9, wobei eine Einrichtung (2, 3) zum Trennen der ausgebildeten Kernplatte (11, 21, 31, 41) in Kernstreifen (13, 23, 33, 43), eine Einrichtung zum Drehen der Kernstreifen (13, 23, 33, 43) und eine Einrichtung zum Zusammenfügen der gedrehten Kernstreifen (13, 23, 33, 43) zu dem Sandwichkern (15) vorgesehen sind.

## Claims

1. A sandwich core comprising a fiber material as core material which withstands a higher load input in a main load direction than in another load direction, the main load direction of the sandwich core being perpendicular to a panel plane defined by two of the in-plane edges of a sandwich core (15) having the greatest linear extension, **characterized in that** the fiber content of the core material consists of lignocellulosic fibers (12) present in a homogeneous structure with at least 80 % of said fibers deviating by an angle of less than 10 % from the perpendicular to the panel plane.

2. The sandwich core according to claim 1, which has a density between 50 and 300 kg/m³.

3. A method for producing a sandwich core according to claim 1 or 2, **characterized in that** in a first method step the individual lignocellulosic fibers (12) are oriented perpendicular to the panel plane, in a second method step the fibers are compacted along the panel plane, and in a third method step a core panel (11, 21, 31, 41) is produced by introducing or activating a binder.

4. The method according to claim 3, wherein the individual fibers (12) are oriented through electrostatic charging by applying an electric field (65) perpendicular to the panel plane between first and second field plates (61).

5. A method for producing a sandwich core according to claim 1 or 2, wherein in a first method step a first orientation of the individual lignocellulosic fibers (12) to form a fiber web (51) is carried out, wherein the orientation of the fibers (12) is provided in the panel plane and in the direction of advance (9) or an orientation is provided in the panel plane and transverse to the direction of advance (9), **characterized in that** a core panel (11, 21, 31, 41) is produced from the fiber web (51) by introducing or activating a binder, the core panel (11, 21, 31, 41) is separated into core strips (13, 23, 33, 43) of a same width, their width corresponding to the height of the sandwich core (15) to be produced, wherein the core strips (13, 23, 33, 43) are rotated through 90° so that a second orientation of the fibers (12) and a main load direction perpendicular to the panel plane are formed, followed by rejoining the core strips (13, 23, 33, 43) in their rotated position at contacting surfaces to form the sandwich core (15).

6. The method according to claim 5, said method including separating the core panel (11, 21, 31, 41) into core strips (13, 23, 33, 43) longitudinal to the direction of advance (9) and rotating each of the core strips (13, 23, 33, 43) about an axis of each of the core strips (13, 23, 33, 43) longitudinal to the direction of advance (9).

7. The method according to claim 5, said method including separating the core panel (11, 21, 31, 41) having the orientation of the individual fibers (12) in the direction of advance into core strips (13, 23, 33, 43) transverse to the direction of advance (9) and rotating each core strip (13, 23, 33, 43) about an axis transverse to the direction of advance (9).

8. A method for producing a sandwich panel, wherein a sandwich core (15) obtainable by a method according to any one of claims 5 to 7 is supplied and provided with at least one covering layer (16).

9. An apparatus for producing a sandwich core by a method according to claim 3 or 4 or according to any one of claims 5 to 7, **characterized in that** a device for forming a fiber web (51) including a device for fiber orientation, a device for introducing a binder, and/or a device for activating the binder with the aim of forming a core panel (11, 21, 31, 41) are provided.

10. The apparatus according to claim 9, wherein the device for fiber orientation comprises a device for forming an electric field (65) between first and second field plates (61), said field plates (61) being arranged parallel to one another and parallel to the panel plane.

11. The apparatus according to claim 9, wherein a device (2, 3) for separating the formed core panel (11, 21, 31, 41) into core strips (13, 23, 33, 43), a device for rotating the core strips (13, 23, 33, 43), and a device for joining the rotated core strips (13, 23, 33, 43) to form the sandwich core (15) are provided.

## Revendications

1. Noyau sandwich, comprenant une matière fibreuse en tant que matière de noyau qui résiste à une insertion de charge supérieure dans une direction de charge principale à dans une autre direction de charge, dans lequel la direction de charge principale du noyau sandwich se situe perpendiculairement à un plan de plaque qui est fixé par deux arêtes situées dans un plan d'un noyau sandwich (15) qui présentent la plus grande étendue longitudinale, **caractérisé en ce que** la proportion de fibres de la matière de noyau se compose de fibres de lignocellulose (12) présentes en structure homogène qui dévient à au moins 80 % d'un angle de moins de 10 % de la perpendiculaire au plan de plaque.

2. Noyau sandwich selon la revendication 1, qui présente une densité comprise entre 50 et 300 kg/m³.

3. Procédé de fabrication d'un noyau sandwich selon la revendication 1 ou 2, **caractérisé en ce que** dans une première étape de procédé, une orientation des fibres de lignocellulose individuelles (12) s'effectue dans la perpendiculaire au plan de plaque, dans une deuxième étape de procédé, les fibres sont compressées le long du plan de plaque et dans une troisième étape de procédé, une plaque de noyau (11, 21, 31, 41) est fabriquée par introduction ou activation d'un liant.

4. Procédé selon la revendication 3, dans lequel l'orientation des fibres individuelles (12) s'effectue par charge électrostatique en ce qu'un champ électrique (65) est appliqué perpendiculairement au plan de plaque entre une première et une seconde plaque de champ (61).

5. Procédé de fabrication d'un noyau sandwich selon la revendication 1 ou 2, dans lequel dans une première étape de procédé, une première orientation des fibres de lignocellulose individuelles (12) s'effectue en un non-tissé fibreux (51), dans lequel l'orientation des fibres (12) est prévue dans le plan de plaque et dans la direction d'alimentation (9) ou une orientation est prévue dans le plan de plaque et de manière transversale à la direction d'alimentation (9), **caractérisé en ce qu'**une plaque de noyau (11, 21, 31, 41) est fabriquée à partir du non-tissé fibreux (51) par introduction ou activation d'un liant, la plaque de noyau (11, 21, 31, 41) est séparée en bandes de noyau (13, 23, 33, 43) de même largeur, dans lequel leur largeur correspond à la hauteur du noyau sandwich à fabriquer (15), dans lequel les bandes de noyau (13, 23, 33, 43) sont tournées de 90° de sorte qu'une seconde orientation des fibres (12) ainsi qu'une direction de charge principale se réalisent perpendiculairement au plan de plaque, suivies d'un nouvel assemblage des bandes de noyau (13, 23, 33, 43) dans leur position tournée au niveau de faces tangentes au noyau sandwich (15).

6. Procédé selon la revendication 5, dans lequel une séparation de la plaque de noyau (11, 21, 31, 41) en bandes de noyau (13, 23, 33, 43) est prévue de manière longitudinale à la direction d'alimentation (9) et une rotation de chacune des bandes de noyau (13, 23, 33, 43) autour d'un axe de chacune des bandes de noyau (13, 23, 33, 43) est prévue de manière longitudinale à la direction d'alimentation (9).

7. Procédé selon la revendication 5, dans lequel une séparation de la plaque de noyau (11, 21, 31, 41) qui présente l'orientation des fibres individuelles (12) dans la direction d'alimentation en bandes de noyau (13, 23, 33, 43) est prévue de manière transversale à la direction d'alimentation (9) et une rotation de chaque bande de noyau (13, 23, 33, 43) est prévue autour d'un axe de manière transversale à la direction d'alimentation (9).

8. Procédé de fabrication d'une plaque sandwich, dans lequel un noyau sandwich (15), pouvant être obtenu conformément à un procédé selon une des revendications 5 à 7, est amené et pourvu d'au moins une couche de recouvrement (16).

9. Dispositif de fabrication d'un noyau sandwich par un procédé selon la revendication 3 ou 4 ou selon une des revendications 5 à 7, **caractérisé en ce qu'**une installation pour la formation d'un non-tissé fibreux (51) y compris une installation pour l'alignement de fibres, une installation pour l'insertion d'un liant et/ou une installation pour l'activation du liant sont prévues avec pour but la réalisation d'une plaque de noyau (11, 21, 31, 41).

10. Dispositif selon la revendication 9, dans lequel l'installation pour l'alignement de fibres comprend une installation pour la réalisation d'un champ électrique (65) entre une première et une seconde plaque de champ (61), dans lequel les plaques de champ (61) sont disposées parallèlement l'une à l'autre et parallèlement au plan de plaque.

11. Dispositif selon la revendication 9, dans lequel une installation (2, 3) pour la séparation de la plaque de noyau réalisée (11, 21, 31, 41) en bandes de noyau (13, 23, 33, 43), une installation pour la rotation des bandes de noyau (13, 23, 33, 43) et une installation pour l'assemblage des bandes de noyau tournées (13, 23, 33, 43) en le noyau sandwich (15) sont prévues.
